# EUROPÄISCHE PATENTSCHRIFT

(11) **EP 2 694 830 B1**
(45) Veröffentlichungstag und Bekanntmachung des Hinweises auf die Patenterteilung: **14.12.2016**
(21) Anmeldenummer: 12714988.8
(22) Anmeldetag: 02.04.2012
(51) Int. Cl.: F16C 33/44, G01L 3/10

(54) **LAGERGEHÄUSE, INSBESONDERE TRETLAGERGEHÄUSE, FÜR EINE WELLE MIT EINEM MAGNETISCHEN SENSOR**
BEARING HOUSING, IN PARTICULAR BOTTOM BRACKET HOUSING, FOR A SHAFT WITH A MAGNETIC SENSOR
LOGEMENT DE ROULEMENT, EN PARTICULIER LOGEMENT DE PÉDALIER, POUR UN ARBRE PRÉSENTANT UN CAPTEUR MAGNÉTIQUE

(30) Priorität: 07.04.2011 DE 102011006911
(43) Veröffentlichungstag der Anmeldung: 12.02.2014
(73) Patentinhaber: Schaeffler Technologies AG & Co. KG, 91074 Herzogenaurach (DE)
(72) Erfinder: BRAUN, Wolfgang, 97493 Bergrheinfeld (DE); BENKERT, Frank, 97534 Waigolshausen (DE); GLÜCK, Stefan, 97424 Schweinfurt (DE)
(86) Internationale Anmeldenummer: PCT/EP2012/055949
(87) Internationale Veröffentlichungsnummer: WO 2012/136619

(56) Entgegenhaltungen:
- DE-A1-102007 046 749
- DE-A1-102008 022 311
- DE-A1-102008 060 116
- US-B1- 6 340 245

## Beschreibung

### Gebiet der Erfindung

Die Erfindung betrifft ein Lagergehäuse, insbesondere eine Tretlagerpatrone, nach dem Oberbegriff von Anspruch 1.

Aus dem Stand der Technik sind Lagergehäuse bekannt, in denen eine Welle drehbar aufgenommen werden kann, wobei das Lagergehäuse mindestens ein Lager umfasst. Das Lagergehäuse kann weiter einen magnetischen Sensor umfassen, der an dem Lagergehäuse befestigt ist und der beispielsweise die Drehzahl der Welle bzw. ein in die Welle eingeleitetes Drehmoment erfasst.

Insbesondere sind als Lagergehäuse sogenannte Tretlagerpatronen bekannt, in denen die Tretlagenivelle eines Fahrrades oder Ergometers drehbar aufgenommen werden kann. Die Tretlagerpatrone umfasst zwei Lager, beispielsweise zwei Wälzlager, die die Tretlagenivelle drehbar gegenüber dem Korpus des Lagergehäuses lagern, wobei an der Innenseite der Tretlagerpatrone mindestens ein magnetischer Sensor angeordnet ist, um die Drehzahl bzw. ein in die Tretlagenivelle eingeleitetes Drehmoment erfassen zu können.

In der Nähe des Lagergehäuses sind häufig elektrische Leitungen oder Komponenten bzw. Motoren angeordnet, von denen Stör-Magnetfelder ausgehen. Der magnetische Sensor in der Tretlagerpatrone bzw. in dem Lagergehäuse muss dabei gegen äußere Stör-Magnetfelder abgeschirmt werden, die beispielsweise von einem Motor stammen können. Hierzu ist es bekannt, den Motor räumlich entfernt von dem Lagergehäuse, also beispielsweise den elektrischen Hilfsantrieb entfernt von der Tretlagerpatrone, anzuordnen. Es ist weiter bekannt, die Einfluss des Stör-Magnetfeldes elektronisch zu erfassen und rechnerisch aus dem Messergebnis des mindestens einen magnetischen Sensors zu beseitigen.

JP 2000335476 AA beschreibt ein als Tretlagerpatrone ausgebildetes Lagergehäuse für ein motorisch unterstütztes Fahrrad mit einem Korpus eines Gehäuses und zwei magnetischen Sensoren, die eine Änderung eines Magnetfeldes erfassen, wenn ein Drehmoment in die Tretlagenivelle eingeleitet wird. Es müssen mindestens zwei magnetische Sensoren vorgesehen sein, die in Richtung der Welle, also in axialer Richtung, beabstandet angeordnet sind, um den Einfluss eines äußeren Stör-Magnetfeldes erfassen und unterdrücken zu können. Das Lagergehäuse ist dazu entsprechend großräumig auszulegen.

US 5,816,599 A beschreibt ebenfalls ein als Tretlagerpatrone ausgebildetes Lagergehäuse mit zwei in Richtung der aufgenommenen Welle beabstandeten magnetischen Sensoren, um den Einfluss von Stör-Magnetfeldern messtechnisch erfassen und rechnerisch unterdrücken zu können.

Aus dem Stand der Technik sind weiter Folien oder Bleche aus Metall-Legierungen mit einer hohen Permeabilität bekannt, beispielsweise aus sogenannten Mu-Metall, die zur Abschirmung niedrigfrequenter Magnetfelder vorgesehen sein können, wobei die Bleche oder Folien ihre Abschirmwirkung deutlich reduzieren, sobald die Bleche bzw. Folien gebogen werden. Gebogene Bleche bzw. Folien erfordern eine nachträgliche Wärmebehandlung, um erneut eine hohe Abschirmwirkung erzielen zu können. Das ist ungünstig, wenn die Bleche bzw. Folien aus dem Mu-Metall einen Verbund mit einem Kunststoff eingehen sollen. Die Wirkung von Mu-Metall und anderen Metall-Legierungen mit einer hohen magnetischen Permeabilität beruht auf der Ausrichtung größerer magnetischer Domänen, die Abmessungen von mehreren Mikrometern aufweisen. Dabei zeigen insbesondere nur dünne Bleche oder Folien eine stark reduzierte Abschirmwirkung.

WO 2009/045416 A1 beschreibt ein Gehäuse zur Aufnahme von elektronischen Komponenten für ein Kraftfahrzeug, wobei das Gehäuse ein Gehäuseteil aus einem Kunststoff aufweist, an dem eine Beschichtung aus einem nanokristallinen Metall aufgebracht ist, um elektromagnetische Störeinflüsse abzuschirmen. Dabei weist die Beschichtung aus dem nanokristallinen Metall eine Schichtdicke auf, die so bemessen ist, dass sich der Elastizitätsmodul aufgrund der Beschichtung mindestens verdoppelt.

Den Stand der Technik nach dem Oberbegriff des Anspruchs 1 stellt hier den DE102007046749 dar.

### Aufgabe der Erfindung

Es ist die Aufgabe der Erfindung, für die eingangs genannte Lageranordnung eine einfache Möglichkeit zur Ausbildung einer magnetischen Abschirmung des magnetischen Sensors gegenüber äußeren Stör-Magnetfeldern anzugeben.

### Zusammenfassung der Erfindung

Diese Aufgabe wird erfindungsgemäß dadurch gelöst, an dem Korpus eine Schicht aus einem nanokristallinen metallischen Material mit hoher magnetischer Permeabilität vorgesehen ist. Aufgrund der nanoskaligen Körnung des nanokristallinen metallischen Materials der Schicht bietet sich die Möglichkeit einer hohen Abschirmung von äußeren Stör-Magnetfeldern, wobei die Schicht so dünn ausgebildet ist, dass die Maßhaltigkeit des Lagergehäuses in Bezug auf eine Anschlusskonstruktion nicht beeinflusst wird. Der Begriff ,hohe magnetische Permeabilität' bezeichnet dabei eine relative Permeabilitätszahl µᵣ von ca. 20000 und mehr.

Vorzugsweise ist vorgesehen, dass die Schicht als Beschichtung ausgebildet ist, die auf die äußere Fläche des Korpus des Lagergehäuses aufgebracht ist. Zwischen der Beschichtung und der äußeren Fläche des Lagergehäuses kann noch eine Zwischenschicht, beispielsweise aus Kupfer, vorgesehen sein.

Alternativ zu einer Beschichtung ist vorzugsweise vorgesehen, dass die Schicht als Hülse ausgebildet ist, die an dem Korpus des Lagergehäuses befestigt ist. Die nanokristalline Schicht kann dabei als dünnwandige, selbsthaltende Hülse aus dem nanokristallinen Material ausgebildet sein.

Ist die nanokristalline Schicht als Hülse ausgebildet, ist vorzugsweise vorgesehen, dass die Hülse über eine Zwischenlage an der äußeren Mantelfläche des Korpus des Lagergehäuses befestigt ist. Die Hülse und die Zwischenlage bilden dabei einen Verbund, der als Verbundbuchse an der äußeren Fläche des Lagergehäuses befestigt wird.

Vorzugsweise ist vorgesehen, dass die Schicht eine Dicke von ca. 25 bis 300 Mikrometern aufweist.

Vorzugsweise ist vorgesehen, dass die Schicht eine mittlere Korngröße von weniger als ca. 100 Nanometern, insbesondere weniger als ca. 30 Nanometern, aufweist.

Vorzugsweise ist vorgesehen, dass das Korpus aus einem Kunststoff besteht. Der Kunststoff kann beispielsweise ein Polyamid oder ein Polyoxymethylen sein.

Das nanokristalline Material ist insbesondere ein nanokristallines Metall wie beispielsweise Nickel, Kobalt und Legierungen hiervon, speziell eine Eisen-Nickel-Legierung oder eine Kobalt-Nickel-Legierung, die mittels Elektroplattieren abgeschieden ist.

Weitere Vorteile und Merkmale ergeben sich aus den abhängigen Ansprüchen sowie aus der folgenden Beschreibung eines bevorzugten Ausführungsbeispiels der Erfindung.

Die Erfindung wird im folgenden unter Bezugnahme auf die anliegende Zeichnung näher beschrieben und erläutert.

### Kurze Beschreibung der Zeichnung

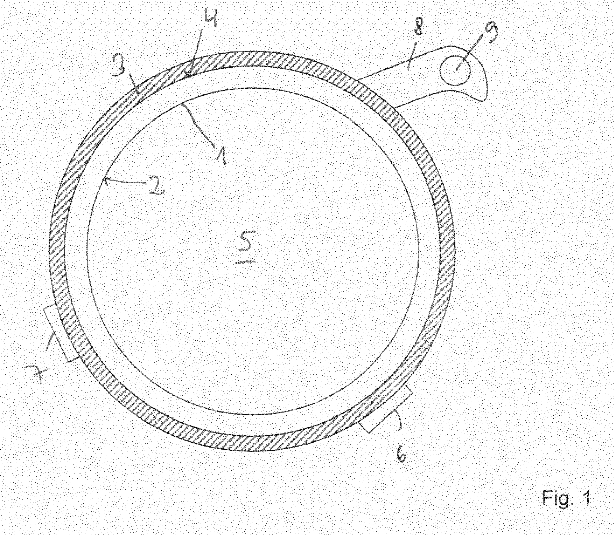

Fig. 1 zeigt schematisch eine geschnittene Ansicht eines Teils eines Ausführungsbeispiels eines erfindungsgemäßen Lagergehäuses, insbesondere einer erfindungsgemäßen Tretlagerpatrone.

### Detaillierte Beschreibung der Zeichnung

Fig. 1 zeigt ein Lagergehäuse, insbesondere eine Tretlagerpatrone zur Aufnahme einer Welle, nämlich einer Tretlagenivelle eines Fahrrades.

Das Lagergehäuse umfasst ein Korpus 1 aus einem Kunststoff, nämlich aus Polyoxymethylen (POM), wobei das Korpus 1 eine im wesentlichen hohlzylindrische Gestalt mit einer Wandstärke von einigen Millimetern aufweist.

An einer inneren Mantelfläche 2 des Korpus 1 ist ein nicht dargestellter magnetischer Sensor, speziell ein Hall-Sensor, mit elektrischen Leitungen angeordnet.

Das Lagergehäuse umfasst weiter zwei Wälzlager, die außerhalb der Bildebene angeordnet sind.

An dem Korpus 1 ist eine Schicht 3 aus einem nanokristallinen Material, nämlich aus einem nanokristallinen Metall, speziell einer nanokristallinen Nickel-Legierung, angeordnet. Die Schicht 3 ist als Beschichtung ausgebildet, die mittels eines chemischen Abscheideverfahrens, speziell mittels Elektroplattieren, auf eine äußere Fläche 4 des Korpus 1 aufgetragen ist. Die Schicht 3 bedeckt die im wesentlichen zylindrische äußere Fläche 4 vollständig mit einer im wesentlichen konstanten Schichtdicke. Die Schicht 3 weist eine Schichtdicke von ca. 100 Mikrometern auf und kann in einem abgewandelten Ausführungsbeispiel eine Schichtdicke von ca. 25 bis 300 Mikrometern aufweisen. Die Dicke der Schicht 3 ist damit deutlich, um mehr als ca. eine Größenordnung, geringer als die Materialdicke des Korpus 1. Das Material der Schicht 3 weist eine mittlere Korngröße von weniger als ca. 100 Nanometern, insbesondere weniger als ca. 30 Nanometern, auf.

Die Schicht 3 aus der nanokristallinen Nickellegierung weist eine hohe magnetische Permeabilität auf, mit einer relativen Permeabilitätszahl µᵣ von mehr als ca. 20000. Ein außerhalb des von dem Korpus 1 umschlossenen Raumes 5 vorhandenes, äußeres Stör-Magnetfeld wird im wesentlichen innerhalb der Schicht 3 um den umschlossenen Raum 5 herumgeführt und tritt im wesentlichen nicht in den Raum 5 ein, so dass die an der inneren Mantelfläche 1 angeordneten magnetischen Sensoren von dem Stör-Magnetfeld unbeeinflusst bleiben. Unmittelbar angrenzend an die Schicht 3 kann beispielsweise ein Elektromotor vorgesehen sein, der die in dem Lagergehäuse drehbar gelagerte Welle als Hilfsmotor im Bedarfsfall antreibt, wobei das Magnetfeld des Elektromotors den mindestens einen magnetischen Sensor an der inneren Mantelfläche 2 des Korpus 1 nicht wesentlich beeinflusst.

An dem Korpus 1 des Lagergehäuses sind zwei radial überstehende Befestigungsabschnitte 6, 7 sowie ein radialer Befestigungsvorsprung 8 mit einer Befestigungsbohrung 9 vorgesehen, wobei die Befestigungsabschnitte 6, 7 sowie der Befestigungsvorsprung einteilig mit dem Korpus 1 des Gehäuses ausgebildet ist, und wobei die Beschichtung im Bereich der Befestigungsabschnitte 6, 7 sowie des Befestigungsvorsprungs 8 nicht ausgebildet ist, so dass eine Maßhaltigkeit des Lagergehäuses gegenüber den Aufnahmen, die den Befestigungsabschnitten 6, 7 und des Befestigungsvorsprungs 8 zugeordnet sind, eingehalten wird.

Bei dem vorstehend beschriebenen Ausführungsbeispiel war die Schicht 3 als Beschichtung ausgebildet, die unmittelbar, ggf. über eine dünne Zwischenlage aus einem Material wie Kupfer, auf der äußeren Fläche 4 des Kunststoff-Korpus 1 aufgetragen war. Es versteht sich, dass die Schicht 3 auch als Hülse ausgebildet sein kann, die auf dem Kunststoff-Korpus 1 befestigt ist, beispielsweise mittels eines Presssitzes. Es versteht sich weiter, dass die Hülse mit einer Zwischenschicht verbunden sein kann, so dass die Hülse und die Zwischenschicht einen Verbund, nämlich eine Verbundbuchse, ausbilden, wobei die Verbundbuchse auf dem Korpus 1 befestigt ist, und zwar beispielsweise derart, dass das Material der Zwischenschicht, beispielsweise ebenfalls ein Kunststoff, insbesondere das gleiche Material wie das Korpus 1, auf der äußeren Fläche 4 des Korpus 1 befestigt ist.

### Bezugszeichenliste

- 1: Korpus
- 2: innere Mantelfläche
- 3: Schicht
- 4: äußere Fläche
- 5: Raum
- 6: Befestigungsabschnitt
- 7: Befestigungsabschnitt
- 8: Befestigungsvorsprung
- 9: Befestigungsbohrung

## Patentansprüche

1. Lagergehäuse zur Aufnahme einer Welle, insbesondere Tretlagerpatrone zur Aufnahme einer Tretlagenivelle, umfassend
ein Korpus (1), und
mindestens einen magnetischen Sensor, der in dem Korpus angeordnet ist,
**dadurch gekennzeichnet,**
**dass** an dem Korpus (1) eine Schicht (3) aus einem nanokristallinen metallischen Material mit hoher magnetischer Permeabilität vorgesehen ist.

2. Lagergehäuse nach Anspruch 1, **dadurch gekennzeichnet, dass** die Schicht (3) als Beschichtung ausgebildet ist, die auf die äußere Fläche (4) des Korpus (1) des Lagergehäuses aufgebracht ist.

3. Lagergehäuse nach Anspruch 1, **dadurch gekennzeichnet, dass** die Schicht als Hülse ausgebildet ist, die an dem Korpus des Lagergehäuses befestigt ist.

4. Lagergehäuse nach Anspruch 4, **dadurch gekennzeichnet, dass** die Hülse über eine Zwischenlage an der äußeren Mantelfläche des Korpus des Lagergehäuses befestigt ist.

5. Lagergehäuse nach einem der Ansprüche 1 bis 4, **dadurch gekennzeichnet, dass** die Schicht (3) eine Dicke von ca. 25 bis 300 Mikrometern aufweist.

6. Lagergehäuse nach einem der Ansprüche 1 bis 5, **dadurch gekennzeichnet, dass** die Schicht (3) eine mittlere Korngröße von weniger als ca. 100 Nanometern, insbesondere weniger als ca. 30 Nanometern, aufweist.

7. Lagergehäuse nach einem der Ansprüche 1 bis 6, **dadurch gekennzeichnet, dass** das Korpus (1) aus einem Kunststoff besteht.

## Claims

1. Bearing housing for receiving a shaft, in particular pedal-crank bearing cartridge for receiving a pedal-crank bearing shaft, comprising
a body (1), and
at least one magnetic sensor which is arranged in the body,
**characterized**
**in that**, on the body (1), there is provided a layer (3) composed of a nanocrystalline metallic material with high magnetic permeability.

2. Bearing housing according to Claim 1, **characterized in that** the layer (3) is in the form of a coating which is applied to the outer surface (4) of the body (1) of the bearing housing.

3. Bearing housing according to Claim 1, **characterised in that** the layer is in the form of a sleeve which is fastened to the body of the bearing housing.

4. Bearing housing according to Claim 4, **characterized in that** the sleeve is fastened by way of an intermediate layer to the outer shell surface of the body of the bearing housing.

5. Bearing housing according to one of Claims 1 to 4, **characterized in that** the layer (3) has a thickness of approximately 25 to 300 micrometres.

6. Bearing housing according to one of Claims 1 to 5, **characterized in that** the layer (3) has a mean grain size of smaller than approximately 100 nanometres, in particular smaller than approximately 30 nanometres.

7. Bearing housing according to one of Claims 1 to 6, **characterized in that** the body (1) is composed of a plastic.

## Revendications

1. Logement de palier destiné à recevoir un arbre, en particulier cartouche de pédalier pour recevoir un arbre de pédalier, comprenant :
un corps (1), et
au moins un capteur magnétique, qui est disposé dans le corps,
**caractérisé en ce**
**qu'**une couche (3) constituée d'un matériau métallique nanocristallin de haute perméabilité magnétique est prévue sur le corps (1).

2. Logement de palier selon la revendication 1, **caractérisé en ce que** la couche (3) est réalisée sous forme de revêtement qui est appliqué sur la surface extérieure (4) du corps (1) du logement de palier.

3. Logement de palier selon la revendication 1, **caractérisé en ce que** la couche est réalisée sous forme de douille qui est fixée sur le corps du logement de palier.

4. Logement de palier selon la revendication 4, **caractérisé en ce que** la douille est fixée par le biais d'une couche intermédiaire sur la surface d'enveloppe extérieure du corps du logement de palier.

5. Logement de palier selon l'une quelconque des revendications 1 à 4, **caractérisé en ce que** la couche (3) présente une épaisseur d'environ 25 à 300 µm.

6. Logement de palier selon l'une quelconque des revendications 1 à 5, **caractérisé en ce que** la couche (3) présente une taille de grains moyenne inférieure à environ 100 nm, en particulier inférieure à environ 30 nm.

7. Logement de palier selon l'une quelconque des revendications 1 à 6, **caractérisé en ce que** le corps (1) se compose d'un plastique.
